Europäisches Patentamt

**European Patent Office**

Office européen des brevets

(11) Veröffentlichungsnummer: **0 206 064 B1**

# (12) EUROPÄISCHE PATENTSCHRIFT

(45) Veröffentlichungstag der Patentschrift: **10.04.91**

(51) Int. Cl.⁵: **H02B 1/04**

(21) Anmeldenummer: **86107785.7**

(22) Anmeldetag: **07.06.86**

(54) **Befestigungsvorrichtung zur Halterung von Funktionsgeräten o. dgl.**

(30) Priorität: **15.06.85 DE 3521634**
**19.04.86 DE 3613295**

(43) Veröffentlichungstag der Anmeldung:
**30.12.86 Patentblatt 86/52**

(45) Bekanntmachung des Hinweises auf die
Patenterteilung:
**10.04.91 Patentblatt 91/15**

(84) Benannte Vertragsstaaten:
**AT CH DE FR GB IT LI SE**

(56) Entgegenhaltungen:
**DE-A- 2 816 450**
**FR-A- 1 181 338**
**US-A- 3 279 728**

(73) Patentinhaber: **E.G.O. Elektro-Geräte Blanc u.**
**Fischer**
**Rote-Tor-Strasse Postfach 11 80**
**W-7519 Oberderdingen(DE)**

(72) Erfinder: **Essig, Willi**
**Tribergstrasse 3**
**W-7030 Böblingen(DE)**
Erfinder: **Kicherer, Robert**
**Amselrain 47**
**W-7519 Oberderdingen(DE)**
Erfinder: **Mayer, Hans**
**Brühlstrasse 8**
**W-7519 Kürnbach(DE)**

(74) Vertreter: **Patentanwälte Ruff und Beier**
**Neckarstrasse 50**
**W-7000 Stuttgart 1(DE)**

# Beschreibung

Die Erfindung betrifft eine Befestigungsvorrichtung zur Halterung von Funktionsgeräten oder dgl., wie Bedienungsgeräten, elektrischen Leistungssteuer-, Schalt-Einrichtungen oder dgl., im Bereich eines Durchbruches an einer Armaturen-Platine, wie einer Geräteblende oder dgl., mit an beiden Seiten der Armaturen-Platine abzustützenden und mit dem Gerätekörper in einer Riegelbewegung in Befestigungseingriff zu bringenden Haltegliedern, die zur Abstützung Stützflächen aufweisen, wobei mindestens ein als Spannglied ausgebildetes Halteglied an einem in Befestigungslage den Durchbruch durchsetzenden Schaft-Abschnitt einen Kopf-Abschnitt aufweist, der mindestens eine der Stützflächen bildet, die in Befestigungslage mit Vorspannung anliegt.

In vielerlei Bereichen, insbesondere bei Elektrogeräten, werden Einzelkomponenten, wie Steuerungs-, Regel-, Schalt-, Anzeige-, Kontroll- und ähnliche Einrichtungen an Gegenstücken befestigt, die in der Regel als Platine bezeichnet werden, wobei die Befestigung mit Schränkbiegelaschen, Kopfschrauben, Gewindebolzen mit Muttern, Steckbolzen mit Krallclips, Bajonettriegeln oder dgl. erfolgen kann, die durch entsprechende Durchtrittsöffnungen der Platine hindurchgesteckt und dann im Bereich mindestens zweier einander gegenüberliegender Seiten der Durchtrittsöffnung mit dem Schränklaschenkopf, dem Schraubenkopf, der Mutter, dem Krallclips, dem Riegelkopf oder dgl. unter Spannung gegen die zugehörige Seite der Platine abgestützt werden. Dabei wird meist beiderseits einer Mittelebene des Spanngliedes eine spiegelsymmetrische Abstützung gewählt und es wird mit den unterschiedlichsten Mitteln eine Selbstsicherung des Spanngliedes gegenüber der Platine versucht, um einem Lockern der Befestigung entgegenzuwirken. Insbesondere bei elektrisch beheizten Geräten kommt außer den beim Gebrauch auftretenden Erschütterungen auch häufig eine beträchtliche thermische Belastung hinzu, die infolge unterschiedlicher Wärmedehnungen sowie durch Verursachung von Materialveränderungen zusätzlich eine Lockerung solcher Befestigungen begünstigt.

Es ist beispielsweise eine Befestigungsvorrichtung bekannt (US-PS 33 32 648), welche für die Anlage an der Innenseite der Platine hakenförmige Halteglieder, für die Anlage an der Außenseite der Platine ein plattenförmiges Halteglied und ein weiteres, als Spannglied ausgebildetes Halteglied aufweist, welches nach Art eines Federschneppers radial nach außen federnd in die Begrenzung des kreisrunden Durchbruches eingreift. Bei einer solchen Ausbildung genügt bereits eine relativ kleine, rechtwinklige zur Platine auf die Einrichtung wirkende Kraft, um die Haltekraft des Spanngliedes zu überwinden und dadurch praktisch die Befestigung der Einrichtung aufzuheben. Insofern eignet sich diese Befestigungsvorrichtung allenfalls für solche Einrichtungen, bei welchen durch die Bedienung oder andere üblicherweise charakteristisch auftretende äußere Einflüsse allenfalls nur sehr geringe Kräfte zu erwarten sind.

Es ist auch eine Befestigungsvorrichtung für einen Schalter bekannt (DE-OS 22 51 676), bei welcher am Körper des Schalters widerhakenartig vorstehende federnde Spreizfinger vorgesehen sind, die am Ende des Einschiebens des Schalters in den Durchbruch nach außen springen und dadurch die Innenseite der Armaturenplatine hintergreifen. Diese Spreizfinger können jedoch aufgrund ihrer Wirkungsweise nicht mit Vorspannung an der zugehörigen Seite der Armaturenplatine anliegen, weshalb ein Schalter auf diese Weise nicht völlig spielfrei zu befestigen ist.

Es ist auch eine spielfreie Befestigung eines Schalters bekanntgeworden (US-PS 43 98 073), bei welcher der Körper des Schalters Federfinger aufweist, die sich an der Innenseite der Platine abstützen und den Schalter nach innen in die Anlage von hakenförmigen Verriegelungsgliedern spannen. Hierbei ist jedoch der verriegelnde Eingriff nicht unmittelbar im Bereich der Platine vorgesehen, weshalb diese an der Innenseite mit einer raumaufwendigen und komplizierten Aufnahme für den Schalter versehen sein muß.

Allen diesen Befestigungsvorrichtungen ist gemeinsam, daß die Stützflächen ihrer Spannglieder aufgrund von Toleranz- oder Maßunterschieden in den ineinandergreifenden Teilen mit unterschiedlichen Zonen an der Armaturenplatine und daher meist nur an ungünstigen Stellen punktförmig bzw. sehr eng begrenzt abgestützt sind, was zu ungünstig hohen Flächenpressungen und daher zu Zwängen in der Materialauswahl führt.

Der Erfindung liegt die Aufgabe zugrunde, eine Befestigungsvorrichtung der genannten Art zu schaffen, die bei einfachem Aufbau und leichter Handhabung eine hohe Sicherheit gegen Lockern gewährleistet.

Diese Aufgabe wird bei einer Befestigungsvorrichtung der eingangs beschriebenen Art gemäß der Erfindung dadurch gelöst, daß der Schaft-Abschnitt mindestens eines Spanngliedes in Befestigungslage quer zur inneren Begrenzung des Durchbruches sowie quer zur Riegelbewegung wenigstens geringfügig beweglich am Gerätekörper angeordnet ist und daß das Spannglied zur selbststeinstellenden Verteilung der Spannkraft über die Stützfläche gegenüber der Platine unter der angreifenden Stützkraft nach Art mindestens einer Gelenkzone in sich federnd beweglich ist. Dadurch wird das Spannglied nicht nur in der Hauptspannrichtung, sondern auch in einer quer bzw. rechtwinklig dazu liegenden Richtung gegenüber dem die Durchtrittsöffnung aufweisenden Gegenstück so eingestellt, daß sich ein äußerst dauerhafter sicherer Halt beispielsweise nach Art einer Verkeilung des Spanngliedes gegenüber dem Gegenstück bzw. gegenüber der Begrenzung der Durchtrittsöffnung ergibt.

Dabei kann mindestens eine Begrenzungskante der Innenfläche der Durchtrittsöffnung wenigstens eine Schneide für das Eindringen in das Spannglied bilden, so daß sich eine unmittelbare zusätzliche Sicherungs-Formschlußverbindung zwischen dem Gegenstück und dem Spannglied ergibt.

Zusätzlich hierzu kann die Befestigungsvorrichtung der dadurch gekennzeichnet sein, daß mindestens ein Spannglied für die in Befestigungslage wenigstens teilweise außerhalb der Begrenzung des Durchbruches an der zugehörigen Seite der Armaturenplatine liegende Anlage ausgebildet ist und zur selbstausgleichenden Anlage über die zur Gelenkachse seiner Gelenkzone querliegende Erstreckung seiner Stützfläche gegenüber dem Körper der Einrichtung um mindestens eine weitere, im Abstand zur anderen Gelenkzone liegende Gelenkzone federnd schwenkbeweglich ist. Dadurch kann die Stützfläche innerhalb der konstruktionsbedingten Grenzen nach Art einer Parallelogrammführung planparallel bzw. translatorisch in der meist rechtwinklig zur Anlagefläche liegenden Anpreßrichtung bewegt werden, so daß sie bei jeder Lage innerhalb dieser Grenzen über ihre ganze Erstreckung anliegt. Die Stützfläche, die somit an einem Abschnitt des Spanngliedes vorgesehen ist, der über einen mindestens zweigelenkigen Federarm am Körper der Einrichtung gehaltert und insofern Bestandteil eines mindestens dreigliedrigen federnden Gelenkarmes ist, gleicht diese planparallele Anlage in einfacher Weise dadurch aus, daß sie je nach Ist-Maß in Richtung quer zur Gelenkachse mindestens einer Gelenkzone geringfügig unterschiedliche Lagen einnimmt. Da die Stützfläche nicht im Bereich der Begrenzung des Durchbruches, sondern außerhalb dieser Begrenzung ausschließlich an der zugehörigen Seite der Armaturenplatine mittelbar oder unmittelbar abgestützt bzw. zur Anlage gebracht werden kann, kann die Spannkraft sehr hoch gewählt werden. Dadurch ergibt sich insbesondere für Regel- und Steuergeräte, beispielsweise handbetätigbare Temperaturregler bzw. für solche Einrichtungen, die beim Gebrauch oder bei der Bedienung quer zur Armaturenplatine und/oder drehend um eine zur Armaturenplatine querliegende Achse hohen Kräften ausgesetzt sind, eine schraubenlose Befestigung, die nach Art einer Klipsbefestigung ausgebildet sein kann, wobei an die Spannglieder hinsichtlich der Elastizität und Federeigenschaften des verwendeten Werkstoffes keine besonders hohen Anforderungen gestellt werden müssen, weil die Federung auf mindestens zwei Gelenkzonen verteilt ist. Es können daher relativ steife Werkstoffe, beispielsweise Kunststoffe, wie Thermoplaste, glasfaserverstärkte Polyamide oder dgl. verwendet werden, die auch bei kleinen Querschnitten verhältnismäßig formstarr und daher zur Übertragung hoher Spannkräfte geeignet sind. Da die Spannkraft in jedem Fall gleichmäßig über die Anlagefläche verteilt ist, ist auch die Gefahr, daß durch zu hohe spezifische Flächenpressung ein Fließen des Werkstoffes auftreten könnte, wesentlich reduziert. Bei Armaturenplatinen aus Blech liegen die bzgl. der Dicke zu erwartenden Toleranzen in der Regel nur im Bereich einiger Hundertstel, allenfalls einiger Zehntel Millimeter, beispielsweise bei ± 0,06 mm. Die Befestigungsvorrichtung kann aber durch entsprechende Dimensionierung auch so gestaltet werden, daß wesentliche größere Maßunterschiede ausgeglichen werden können, so daß sie gleichermaßen gut für Armaturenplatinen unterschiedlicher Dicke ist. Außer planparallel stellt sich das Spannglied mit seiner Stützfläche ggf. auch auf davon abweichende Schräglagen der Gegenfläche von selbst ein.

Nach einem weiteren Merkmal der Erfindung weist mindestens eine als Querspannfläche vorgesehene Stützfläche eine insbesondere für die Anlage an der zugehörigen Begrenzungskante einer Kantenfläche der Durchtrittsöffnung vorgesehene Keilfläche auf, die vorzugsweise zur Mittelebene unter einem sich zum Ende des Kopfes öffnenden spitzen Winkel liegt und sich beim in Eingriff bringen des Spanngliedes mit der Platine unter Keilwirkung gegen die zugehörige Begrenzungskante festzieht, die dann auch zusätzlich noch in diese Keilfläche in der beschriebenen Weise unter Bildung einer entsprechenden Vertiefung eindringen kann.

Die von dieser Keilfläche abgekehrte Außenfläche des Spanngliedes bildet dann im Bereich der gegenüberliegenden Seite der Kantenfläche der Durchtrittsöffnung eine Widerlagerfläche für die Verkeilung.

Zweckmäßig ist auch diese Widerlagerfläche als Keilfläche ausgebildet, wobei der größte Abstand zwischen den beiden Keilflächen voneinander größer als die zugehörige Weite der Durchtrittsöffnung ist und die Widerlagerfläche gegenüber der Mittelebene einen kleineren Keilwinkel von vorzugsweise nur wenigen Winkelgraden einnimmt. Dadurch ergibt sich auch im Bereich der Widerlagerfläche eine sehr flächenkleine, ggf. linienförmige, und dadurch genau definierte Abstützung mit hohen spezifischen Flächendrücken.

Um andererseits in der Hauptspannrichtung sehr sicher abstützen zu können, weist mindestens eine als Hauptspannfläche vorgesehene Stützfläche eine Schulterfläche auf, die vorzugsweise für die Abstützung an der zugehörigen Seite der Platine nur im Abstand außerhalb der zugehörigen Begrenzungskante der Durchtrittsöffnung ausgebildet ist, also nicht bis zu dieser Begrenzungskante an der Platine anliegt, so daß sich auch hier eine sehr genau definierte Anlage selbst dann ergibt, wenn die Schulterfläche infolge innerer Verformungen des Spanngliedes zu Lageveränderungen neigt. Es ist dabei durchaus denkbar, daß jede Stützfläche sowohl als Querspannfläche wie auch als Hauptspannfläche ausgebildet ist, so daß sie also einerseits eine quer zur Hauptspannrichtung liegende Spannkraftkomponente und andererseits, insondere mit einem weiteren und ggf. im Winkel dazu liegenden Flächenabschnitt, eine Spannkraftkomponente in Hauptspannrichtung bewirkt. Besonders zweckmäßig ist es jedoch, wenn eine Stützfläche in diesem Sinne als Hauptspannfläche und als Querspannfläche ausgebildet ist, während die andere Stützfläche nur als Querspannfläche ausgebildet ist.

Damit, insbesondere bei Verwendung mehrerer, im Abstand zueinanderliegender Spannglieder, eventuelle Toleranzdifferenzen zwischen der Lage der Spannglieder und derjenigen der Durchtrittsöffnungen leicht ausgeglichen werden können, ist ein den Kopf tragender Schaft des Spanngliedes in sich bzw. statt dessen oder zusätzlich hierzu in seiner Verbindung mit einem Sockelkörper, insbesondere in der Querspannrichtung, elastisch federnd verformbar ausgebildet, wodurch auch Bewegungen in der Querspannrichtung zur Anpassung an die verkeilte Lage besonders gut ermöglicht werden.

Nach einem weiteren Merkmal der Erfindung liegen die Gelenkachsen der Gelenkzonen des Spanngliedes wenigstens annähernd parallel zueinander, so daß die Bewegung der Stützfläche parallel zur Wandebene bei Auslenkungen des Gelenkarmes genau linear ist. Statt dessen oder zusätzlich hierzu, liegen die Gelenkachsen zweckmäßig rechtwinklig zu einer Axialebene des Durchbruches bzw. der Befestigungsvorrichtung, so daß sich bei geringen Auslenkwinkeln relativ große Bewegungen der Stützfläche rechtwinklig zur Wandebene ergeben.

Es ist denkbar, beide Gelenkachsen des Spanngliedes an einer Seite der Armaturenplatine bzw. von deren Wandebene, also an der Innen- oder Außenseite vorzusehen. Zweckmäßig liegt eine Gelenkachse derart, daß sie nahezu in der Anlageebene vorgesehen ist bzw. von dieser nur den für die Unterbringung der Gelenkzone erforderlichen Abstand hat. Dadurch ist es möglich, die Gelenkachse so unterzubringen, daß sie in Ansicht auf die Stützfläche innerhalb von deren Projektion und nicht gegenüber der Anlagefläche nach außen versetzt liegt, so daß die Gelenkzone bzw. die Gelenkachse in Spannrichtung kippmomentfrei unmittelbar durch die Stützfläche abgestützt wird. Die Gelenkachse kann dabei im Bereich der bzw. in Nähe der Mitte der zur Gelenkzone querliegenden Erstreckung der Anlagefläche vorgesehen sein, liegt aber bevorzugt benachbart zu einer Begrenzung dieser Erstreckung, insbesondere benachbart zu der dem Durchbruch zugekehrten Begrenzung der Anlagefläche.

Mindestens zwei Gelenkachsen des Spanngliedes können in einer zur Stützfläche bzw. zur Wandebene der Armaturenplatine nahezu rechtwinkligen gemeinsamen Axialebene liegen. Um jedoch eine für die Federeigenschaften günstige Geometrie des das Spannglied bildenden Gelenkarmes zu erzielen, liegen die Gelenkachsen der Gelenkzonen unter einem Schrägwinkel gegenüber der Wandebene. Hierbei ist es vorteilhaft, wenn die näher bei der Anlagefläche des Spanngliedes liegende Gelenkachse in Bezug auf die Begrenzung des Durchbruches nach außen in den vom Durchbruch freien Bereich der Armaturenplatine und die andere, ggf. benachbarte Gelenkachse in Bezug auf diese Begrenzung des Durchbruches nach innen versetzt liegt.

Alle an der Einrichtung vorgesehenen Teile der Befestigungsvorrichtung bzw. alle Abschnitte jedes Spanngliedes können einteilig ausgebildet werden und es sind - wie auch denkbar - keine zwei- oder mehrteiligen Gelenke mit gesonderten Federn erforderlich, sondern filmgelenkähnliche Gelenkzonen vorgesehen, deren Querschnitte das Maß von üblichen Filmgelenken weit übersteigen, eine Eigenfederung mit sehr hoher Federkraft aufweisen und somit hohe Spannkräfte übertragen.

Zur weiteren Verbesserung der genau definierten Anlage der Anlagefläche bei gleichmäßiger Verteilung der Flächenpressung, reicht die Stütz- bzw. Anlagefläche zweckmäßig nicht bis an die Begrenzung des Durchbruches, sondern hat sie von dieser wenigstens einen kleinen Abstand, so daß sie also ausschließlich außerhalb des Durchbruches an der Armaturenplatine anliegt.

Eine besonders formstabile, kompakte und einfach zu montierende Ausgestaltung des Erfindungsgegenstandes ergibt sich, wenn das auf der anderen Seite der Armaturenwand abzustützende Halteglied formstabil bzw. nicht federnd angeordnet ist, so daß seine Stützfläche unabhängig von den auftretenden Toleranzen die Lage der Einrichtung gegenüber der zugehörigen Seite der Armaturenplatine genau bestimmt.

Durch Wahl eines verhältnismäßig großen Krümmungsradius' einer Wölbung der Stützfläche kann die wirksame Breite der Stützfläche verhältnismäßig groß gehalten werden.

Obwohl die erfindungsgemäße Ausbildung auch bei ggf. zwei- oder mehrteiligen Befestigungsgliedern der eingangs beschriebenen Art möglich ist, ergibt sich doch eine besonders gute Wirkung, wenn die Spannglieder nach Art von bajonettverschlußartigen Vorsprüngen ausgebildet sind, die lediglich durch zwei im rechten Winkel zueinanderliegende Bewegungen, nämlich eine Bewegung rechtwinklig zur Platine und eine Bewegung parallel zu deren Ebene in Eingriff mit der Platine gebracht werden können, ohne daß irgendwelche zusätzlichen Befestigungteile oder eine lösbare Anordnung der Spannglieder an dem Sockelkörper erforderlich sind. Insbesondere im Falle von zu befestigenden Komponenten, die beispielsweise zur Bedienung oder dgl. einen durch die Platine nach außen vorstehenden Teil, wie eine Stellwelle aufweisen, ist es zweckmäßig, wenn die Spannglieder und die Durchtrittsöffnungen so angeordnet sind, daß die Spannglieder durch Drehen um eine zur Platine etwa rechtwinklige Betätigungsachse in und außer Eingriff mit der Platine gebracht werden können. In diesem Fall ist es besonders zweckmäßig, wenn die Querspannrichtung auf das jeweilige Spannglied hinsichtlich der Betätigungsachse vor allem radial nach außen gerichtet wirkt und wenn die der Hauptspannfläche zugehörige Schulterfläche an der radial äußeren Seite des Kopfes vorgesehen ist. Außerdem kann in diesem Fall der Halt der Spannvorrichtung auch dadurch verbessert werden, daß mindestens eine Keilfläche etwa um diese Befestigungsachse, ebenso wie die zugehörige Begrenzung der Durchtrittsöffnung, gekrümmt ist. Unabhängig von der Wölbung der Anlagefläche ist das Vorsehen einer geneigten Seitenflanke an der Anlagefläche bzw. am Spannglied insbesondere dann vorteilhaft, wenn die Begrenzung des Durchbruches zum bajonettverschlußartigen Einführen des jeweiligen Spanngliedes einen Ausschnitt aufweist. Nach dem axialen Einführen des Spanngliedes in diesen Ausschnitt muß nämlich das Spannglied um die Mittelachse der Befestigungsvorrichtung für den Bajonetteingriff verdreht werden, wobei dann die in dieser Drehrichtung vorne liegende Seitenflanke an der zugehörigen seitlichen Begrenzung des Ausschnittes aufläuft und das Spannglied unter Vorspannung bringt, bis seine Anlagefläche auf die zugehörige, zum Ausschnitt benachbarte Gegenfläche der Armaturenplatine gelangt ist. Außer dem Durchbruch bedarf die Armaturenplatine im Bereich der Befestigungsvorrichtung keinerlei besonderer Profilierungen, sondern sie kann an ihren beiden Oberflächen durchgehend ebenenparallel begrenzt sein. Durch das bajonettverschlußartige Einsetzen des Spanngliedes braucht dieses nicht nach Art eines Klipses einen verhältnismäßig großen Federweg haben, da das Spannglied beim Einsetzen nicht über seine Befestigungslage hinaus ausgelenkt zu werden braucht. Würde man eine solche Auslenkung vorsehen, so könnte das Spannglied gleichzeitig ein Rastglied zur Verdrehsicherung bilden, das in Befestigungslage in ein entsprechendes Gegenglied, beispielsweise einen Ausschnitt der Armaturenplatine, eingreift.

Insbesondere, wenn eine so große Auslenkung des Spanngliedes nicht vorgesehen ist, ist zur Verdrehsicherung der Einrichtung in der Befestigungslage zweckmäßig mindestens ein federndes Rastglied vorgesehen, so daß die Verdrehsicherung nicht alleine durch das Spannglied bzw. durch die auf dieses wirkende Reibung übernommen werden muß. Dadurch ist die Befestigungsvorrichtung auch für kontinuierlich oder stufenweise arbeitende, durch Drehbewegung zu betätigende Leistungssteuer- und Schalt-Einrichtungen geeignet, auf die hohe Drehkräfte um die Mittelachse der Befestigungsvorrichtung einwirken, wie sie beispielsweise an Waschmaschinen vorgesehen sind. Zur Erzielung einer formschlüssigen Verdrehsicherung ist das Rastglied durch eine für den Eingriff in eine Rastausnehmung in der Begrenzung des Durchbruches ausgebildete Federzunge gebildet, die vorzugsweise einteilig mit dem Spannglied ausgebildet ist.

Diese und weitere Merkmale von bevorzugten Weiterbildungen der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können. Ein Ausführungsbeispiel der Erfindung ist in den Zeichnungen dargestellt und wird im folgenden näher erläutert. In den Zeichnungen zeigen

Fig. 1      eine erfindungsgemäße Befestigungsvorrichtung im Axialschnitt,

Fig. 2      die Befestigungsvorrichtung gemäß Fig. 1 in Draufsicht,

Fig. 3      den Sockelkörper der Befestigungsvor richtung gemäß Fig. 1 in Draufsicht und verkleinerter Darstellung,

Fig. 4      einen Ausschnitt der Fig. 3 in vergrößerter perspektivischer Darstellung,

Fig. 5      einen Ausschnitt der das Gegenstück für den Sockelkörper bildenden Platine in Draufsicht,

Fig. 6      einen Ausschnitt der Fig. 1 in vergrößerter Darstellung,

Fig. 7      den Ausschnitt gemäß Fig. 6 in Ansicht von unten,

Fig. 8      eine erfindungsgemäße Befestigungsvorrichtung in einem Axialschnitt,

Fig. 9      die Befestigungsvorrichtung gemäß Fig. 8 in Ansicht von rechts,

Fig. 10     die Befestigungsvorrichtung gemäß Fig. 8, jedoch um 90° verdreht,

Fig. 11     die Armaturenplatine gemäß Fig. 10 in Ansicht von rechts und ohne befestigte Einrichtung,

Fig. 12     ein Ausschnitt der Fig. 8 in vergrößerter und um 90° verdrehter Darstellung,

Fig. 13     eine schematische Darstellung des Spanngliedes gemäß Fig. 12,

Fig. 14     ein Schnitt nach der Linie XIV-XIV in Fig. 12,

Fig. 15     ein Ausschnitt der Fig. 10 in einer Darstellung entsprechend Fig. 12.

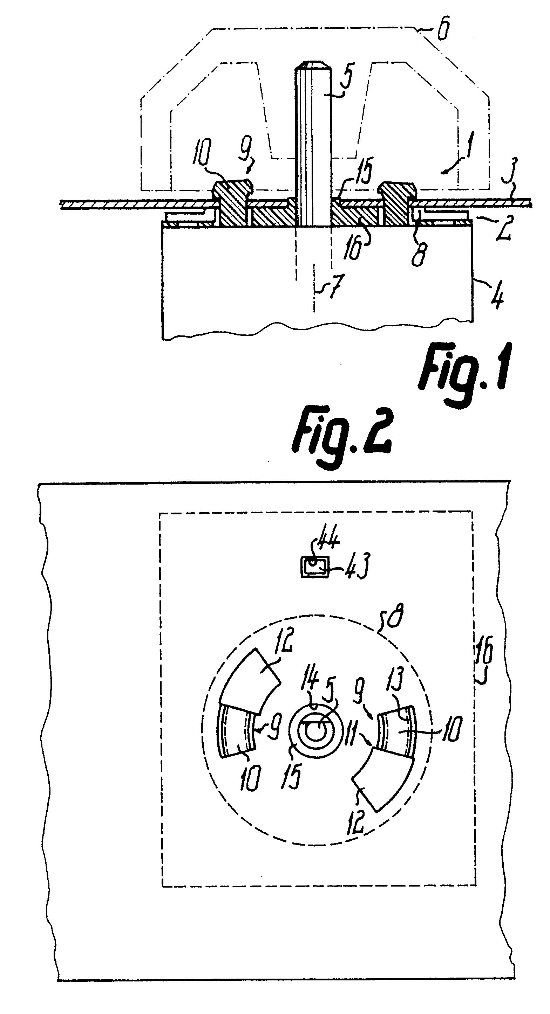

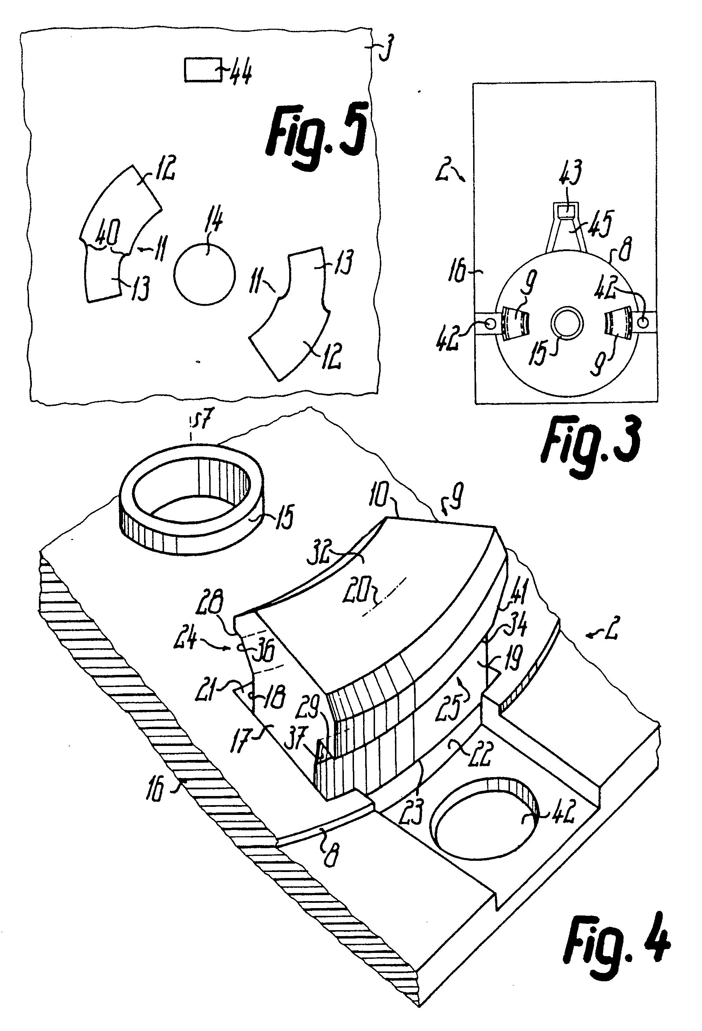

Die in den Fig. 1 bis 7 dargestellte Befestigungsvorrichtung 1, die zur Befestigung eines Bedienungsgerätes oder dgl. an der Innenseite eines Gegenstückes, beispielsweise einer ebenen, aus Blech bestehenden Platine 3 dient, besteht im wesentlichen nur aus zwei einstückigen Teilen, nämlich einem flachen, an der zugehörigen Gehäuseseite des Bedienungsgerätes 4 anzuordnenden Sockelteil 2 und der Platine 3 selbst. Das Bedienungsgerät 4 weist eine den Sockelteil 2 und die Platine 3 durchsetzende Stellwelle 5 auf, die an ihrem an der Außenseite der Platine 3 liegenden Ende eine Handhabe 6, wie einen Betätigungsknopf trägt, welcher den Sockelteil 2, zumindest insoweit wie er an der Vorderseite der Platine 3 liegt, beispielsweise kappenartig überdeckt. Der Sockelteil 2 weist an der Innenseite und an der Außenseite der Platine 3 unter Vorspannung anliegende Halteglieder, nämlich als an der Innenseite anliegendes Gegenglied 8 einen zur Betätigungsachse 7 koaxialen, kreisförmigen flachen Vorsprung, sowie zwei einander zur Betätigungsachse 7 diametral gegenüberliegende, gegenüber dem Außenumfang des Gegengliedes 8 geringfügig nach innen versetzte Spannglieder 9 auf, die jeweils mit einem Kopf 10 innerhalb des Außenumfanges des Gegengliedes 8 an der Außenseite der Platine 3 mit Vorspannung abgestützt sind. Die Spannglieder 9 durchsetzen Durchtrittsöffnungen 11 in der Platine 3, die um die Betätigungsachse 7 gekrümmt liegen und jeweils gleichsinnig an einem Ende einen zum Durchstecken des Kopfes 10 genügend weiten Einführabschnitt 11 und in Bogenrichtung daran anschließend einen das andere Ende bildenden Sperrabschnitt 13 aufweisen, dessen Weite entsprechend kleiner als diejenige des Kopfes 10 ist. Zwischen den Durchtrittsöffnungen 11 ist in der Betätigungsachse 7 außerdem eine kreisrunde Durchgangsöffnung 14 in der Platine 3 vorgesehen, die gegenüber dem Außenquerschnitt der Stellwelle 5 weiter ist und in die ein von der Stellwelle 5 durchsetzter, zylindrischer Muffenansatz 15 an der zugehörigen Seite des Sockelteiles 2 mit ausreichend großem Radialspiel eingreift, um eine Ausrichtung des Sockelteiles 2 gegenüber Platine 3 nur durch den Eingriff der Spannglieder 9 in die Sperrabschnitte 13 zu gewährleisten. Der Muffenansatz 15 hat eine Höhe, die nur etwa so groß wie die Dicke der Platine 3 ist, so daß er über deren Außenseite praktisch nicht oder nur geringfügig vorsteht und gegenüber den äußeren Enden der Spannglieder 9 zurückversetzt ist.

Der Sockelteil 2 ist im wesentlichen durch einen flachen, nur wenige Millimeter dicken, plattenförmigen Sockelkörper 16 gebildet, über dessen eine Plattenseite die Spannglieder 9 nur um wenig mehr als seine Dicke vorstehen. Jedes Spannglied 9 weist einen den Kopf 10 tragenden und gegenüber diesem schlankeren Schaft 17 auf, der um die Betätigungsachse 7 nach Art eines Ringausschnittes ebenso wie der Kopf 10 gekrümmt ist, wobei der Kopf 10 und der Schaft 17 jeweils in einer gemeinsamen Axialebene der Betätigungsachse 7 liegende durchgehende Endflächen aufweisen und sich über einen Bogenwinkel von weniger als 45°, insbesondere etwa 30° erstrecken. Der Schaft 17 ist nur im Bereich dieser Endflächen über die ganze Dicke einteilig an den Sockelkörper 16 angebunden, während seine zur Platine 3 rechtwinkligen, also zylindrischen Innen- und Außenumfangsflächen 18,19 bis zu der von den Köpfen 10 abgekehrten, ebenen Seite des Sockelkörpers 16 freiliegen. Diese Umfangsflächen 18,19, die beiderseits einer hier als Mittelebene 20 bezeichneten, um die Betätigungsachse 7 gekrümmten, gedachten Hüllfläche liegen, sind jeweils von einem um die Betätigungsachse 7 gekrümmten Schlitz 21 bzw. 22 begrenzt, welcher den Sockelkörper 16 über seine gesamte Dicke durchsetzt und dessen Breite kleiner als die Breite des Schaftes 17 ist. Die Enden jedes Schlitzes 21 bzw. 22 liegen etwa in den Ebenen der Endflächen der Spannglieder 9. Dadurch bildet der Schaft 17 einen um die Betätigungsachse 7 gekrümmten, zwischen den Schlitzen 21, 22 liegenden Fußsteg 23, der nur an seinen Enden mit dem Sockelkörper 16 durch einteilige Ausbildung verbunden ist und es dem Schaft 17 erlaubt, geringe federnde Kippbewegungen gegenüber dem Sockelkörper 16 im wesentlichen nur in einer Ebene auszuführen.

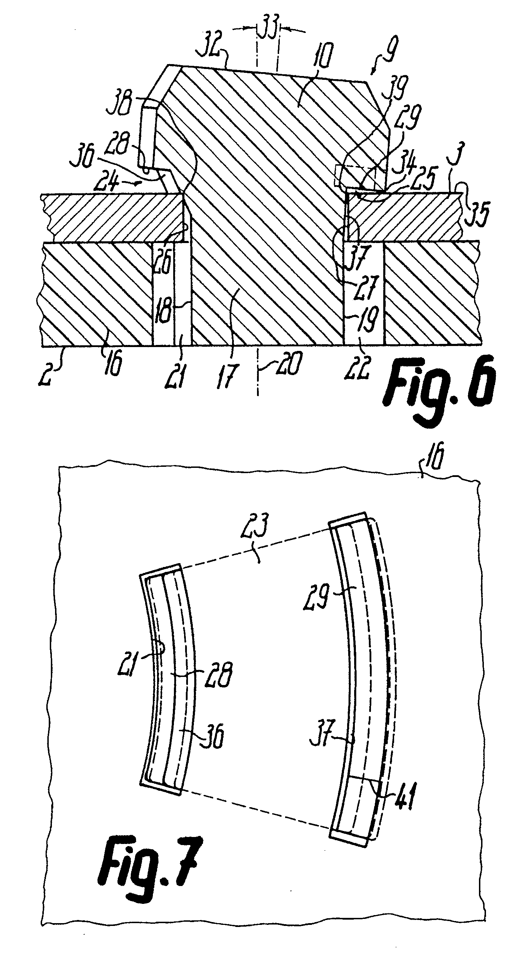

Der Kopf 10 jedes Spanngliedes 9 weist sowohl an seiner der Betätigungsachse 7 zugekehrten, radial inneren wie auch an seiner radial äußeren Seite jeweils eine über seine gesamte Bogenerstreckung im wesentlichen gleichförmig durchgehende Stützfläche 24 bzw. 25 auf. Die innere Stützfläche 24 steht über die zugehörige, konvexe Kantenfläche 26 und die äußere Stützfläche 25 über die zugehörige, konkave Kantenfläche 27 des Sperrabschnittes 13 der zugehörigen Durchtrittsöffnung 11 im Bereich der Außenseite der Platine 3 vor. Jede Stützfläche 24 bzw. 25 weist eine an der Außenseite der Platine 3 liegende, im wesentlichen die innere Begrenzung des Kopfes 10 bildende, ringausschnittförmige, ebene Schulterfläche 28 bzw. 29 etwa gleicher Breite auf, wobei die beiden Schulterflächen 28,29 jeweils unter einem kleinen, sich zu der der Stützfläche 24 zugehörigen Seite des Kopfes 10 öffnenden Winkel zur Platine 3 schräg liegen, jedoch jeweils zwischen beiden Endflächen des Kopfes 10 im wesentlichen konstante Abstände von der Platine 3 haben. Die Schulterfläche 28 der Stützfläche 24 ist gegenüber der anderen Schulterfläche 29 in Richtung zum Ende 32 des Kopfes 10 um ein geringes Maß versetzt, wobei die beiden Schulterflächen 28,29 in einer gemeinsamen Ebene liegen können und ihre beschriebene Winkellage gegenüber der Platine 3 dem in Fig. 6 mit 33 angegebenen Winkel entspricht, um welchen der Kopf 10 als Ganzes gegenüber dem Schaft 17 verkippt angeordnet ist. Dadurch kommt nur die Schulterfläche 29 mit ihrer vom Schaft 17 abgekehrten äußeren, teilringförmigen Begrenzungskante 34 in Kontakt mit der zugehörigen Seite, nämlich der Außenseite 35 der Platine 3, während die andere Schulterfläche 28 im Normalfall im Abstand von dieser Außenseite 35 liegt und nur bei stärkeren Beschädigungen der Befestigungsvorrichtung sichernd an dieser Außenseite 35 anschlagen kann. Die Begrenzungskante 34 ist im Querschnitt etwa rechtwinklig begrenzt, da der Kopf 10 sowohl an seiner der Betätigungsachse 7 zugekehrten als auch an der davon abgekehrten Seite im wesentlichen teilzylindrische Begrenzungsflächen aufweist, deren gemeinsame Krümmungsachse gegenüber der Betätigungsachse 7 um den Winkel 33 verkippt ist und die über Anphasungen in die zu ihnen rechtwinklige, ebene Endfläche am Ende 32 des Kopfes 10 übergehen.

An die dem Schaft 7 zugekehrte Begrenzung der Schulterfläche 28 schließt eine diese mit der Innenumfangsfläche 18 verbindende Keilfläche 36 in Form einer konkav gekrümmten Teilkegelfläche an, deren sich zum Ende 32 des Kopfes 10 öffnender, spitzer Winkel gegenüber der Mittelebene 20 wesentlich größer als der Winkel 33 ist. Die Keilfläche 36 erstreckt sich über einen so großen Abschnitt des Schaftes 17, daß sie in jedem Fall bis in den Sperrabschnitt 13 der Durchtrittsöffnung 11 reicht, wobei sie zweckmäßig so angeordnet ist, daß sie in Befestigungslage der Befestigungsvorrichtung etwa mit der Mitte ihrer Höhe im Bereich der äußeren, zu ihr etwa koaxialen, konvexen Begrenzungskante 38 der zugehörigen Kantenfläche 26 des Sperrabschnittes 13 liegt. Eine weitere, entsprechende, jedoch konvex teilkegelförmig gekrümmte Keilfläche 37 schließt etwa rechtwinklig an die dem Schaft 17 zugekehrte innere Begrenzung der Schulterfläche 29 an, wobei diese, mindestens gleiche Höhe wie die Keilfläche 38 aufweisende Keilfläche 37 jedoch im Vergleich zur Keilfläche 36 unter einem wesentlich kleineren, sich in derselben Richtung öffnenden Winkel zur Mittelebene 20 liegt. Dieser Winkel kann etwa gleich dem Winkel 33 sein und liegt beispielsweise in der Größenordnung von 5°, während der genannte Winkel der Keilfläche 36 mehrfach größer ist und beispielsweise in der Größenordnung von 25° liegt. Etwa der mittlere, radiale Abstand zwischen den Keilflächen 36,37 ist gleich dem Abstand zwischen den Kantenflächen 26,27 bzw. zwischen den an der Außenseite 35 der Platine 3 liegenden Begrenzungskanten 38,39.

Nach dem Durchstecken der Köpfe 10 der Spannglieder 9 durch die Einführabschnitte 12 der Durchtrittsöffnungen 11 wird der Sockelteil 2 mit den Spanngliedern 9 um die Betätigungsachse 7 so gegenüber der Platine 3 verdreht, daß die Köpfe 10 in den Bereich der Sperrabschnitte 13 bewegt werden. Die Übergänge zwischen den Einführabschnitten 12 und den Sperrabschnitten 13 sind durch trichterartig allmählich verjüngte, beispielsweise teilkreisförmig abgerundete Kantenabschnitte 40 gebildet, so daß die Keilflächen 36,37 leicht zwischen die Kantenflächen 26,27 finden. Mit dem Drehen schneidet sich die Begrenzungskante 38 in die Keilfläche 36 ein, während gleichzeitig der Kopf 10 durch Druckbelastung an der Begrenzungskante 34 federnd nach innen gekippt wird, so daß die Keilfläche 36 die Tendenz hat, sich weiter in den Sperrabschnitt 13 hineinzuziehen und dadurch die Begrenzungskante 38 in Richtung zum Ende 32 des Kopfes 10 gegenüber sich ansteigen zu lassen. Dadurch entsteht eine äußerst haltbare Keilverspannung zwischen dem Sockelteil 2 und der Platine 3. An dem in Drehrichtung vorderen Ende kann mindestens ein Abschnitt wenigstens einer Stützfläche 24 bzw. 25 mit einer beispielsweise schrägen Einlauf-Führungsfläche versehen sein, um ein verhakungsfreies Einlaufen in den Sperrabschnitt 13 zu erleichtern. Eine solche Einlauf-Führungsfläche 41 ist als Beispiel am zugehörigen Ende der Schulterfläche 29 dargestellt. Durch die beschriebene Ausbildung steht das Spannglied 9 nur im Bereich von drei gekrümmten Linienzonen in Eingriff mit der Platine 3, nämlich im Bereich der Begrenzungskanten 34,38,39.

Unmittelbar benachbart zu jedem Spannglied 9 bildet der Sockelkörper 16 ein Befestigungsglied zur Befestigung des Sockelteiles 2 am Bedienungsgerät 4, wobei die Befestigungsglieder im dargestellten Ausführungsbeispiel durch Schrauben-Durchgangslöcher 42 gebildet sind. Diese Durchgangslöcher 42 liegen in derart gegenüber dem Gegenglied 8 vertieften Abschnitten des Sockelkörpers 16, daß die in diesen Abschnitten liegenden Köpfe der Befestigungsschrauben nicht bis zur Anlagefläche des Gegengliedes 8 bzw. bis zur Platine 3 vorstehen. Im dargestellten Ausführungsbeispiel sind die Durchgangslöcher 42 benachbart zum Außenumfang des Gegengliedes 8 an den voneinander abgekehrten Seiten der Spannglieder 9 vorgesehen, so daß die Befestigungsschrauben die beim Anziehen der Befestigungsvorrichtung auf die Spannglieder 9 wirkenden Kräfte besonders gut mit aufnehmen können.

Zur zusätzlichen Sicherung des Sockelteiles 2 in der seiner Befestigungsstellung zugehörigen Drehlage gegenüber der Platine 3, weist der Sockelteil 2 einen Sicherungsnocken 43 auf, der über die Anlagefläche des Gegengliedes 8 etwa um die Dicke der Platine 3 vorsteht und in einer zwischen den Spanngliedern 9 liegenden Axialebene der Betätigungsachse 7 außerhalb des Außenumfanges des Gegengliedes 8 vorgesehen ist. Der Sicherungsnocken 43, dem in der Platine 3 eine an ihn angepaßte Nockenöffnung 44 für den Eingriff zugeordnet ist, ist einteilig aus dem Sockelteil 2 herausgeformt und am freien Ende eines in einem Ausschnitt in der Ebene des Sockelkörpers 16 liegenden Federarmes 45 vorgesehen, der vom Außenumfang des Gegengliedes 8 ausgeht. Der Sicherungsnocken 43 rastet dadurch bei Erreichen der Befestigungsstellung des Sockelteiles 2 selbsttätig in die Nockenöffnung 44 ein und kann durch Zurückdrücken von der Außenseite der Platine 3 jederzeit wieder entriegelt werden. Die Befestigungsvorrichtung kann auch so ausgebildet sein, daß sie statt durch eine Drehbewegung durch eine beispielsweise rein translatorische Relativbewegung des Sockelteiles 2 und der Platine 3, also durch eine etwa geradlinige Verschiebebewegung parallel zur Platine 3, in und außer Eingriff zu bringen ist. Die bzw. alle Spannglieder sind dann in der Verschieberichtung, also beispielsweise parallel zueinander, ausgerichtet.

Der Sicherungsnocken 43, der bei der Ausführung entsprechend Fig. 2,3 und 5 außerhalb des von den beiden Spanngliedern 9 definierten Kreises liegt, kann vorteilhaft auch innerhalb dieses Kreisbereichs angeordnet sein, so daß auch eine kleine Handhabe 6 in Form eines Drehknopfes ihn überdeckt.

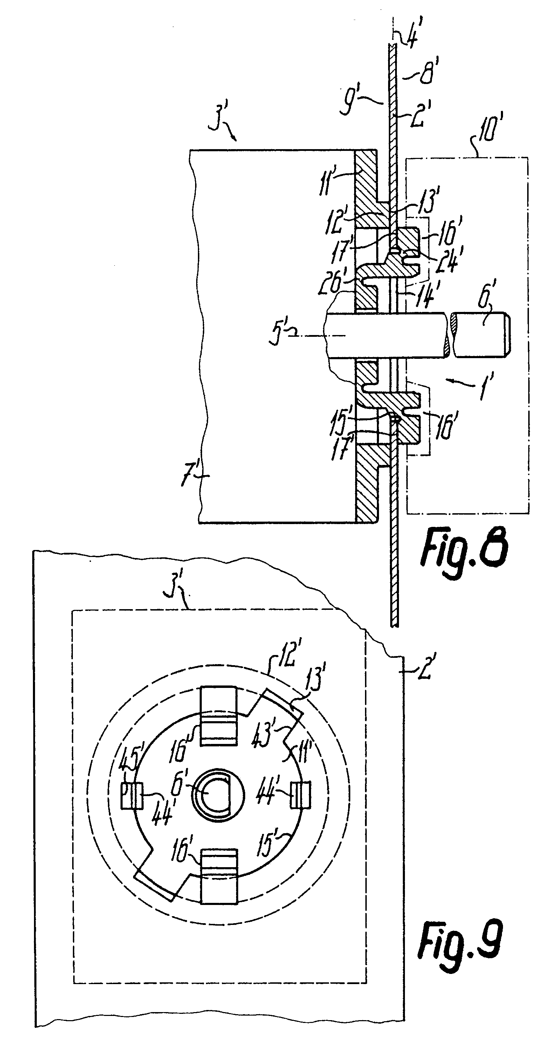

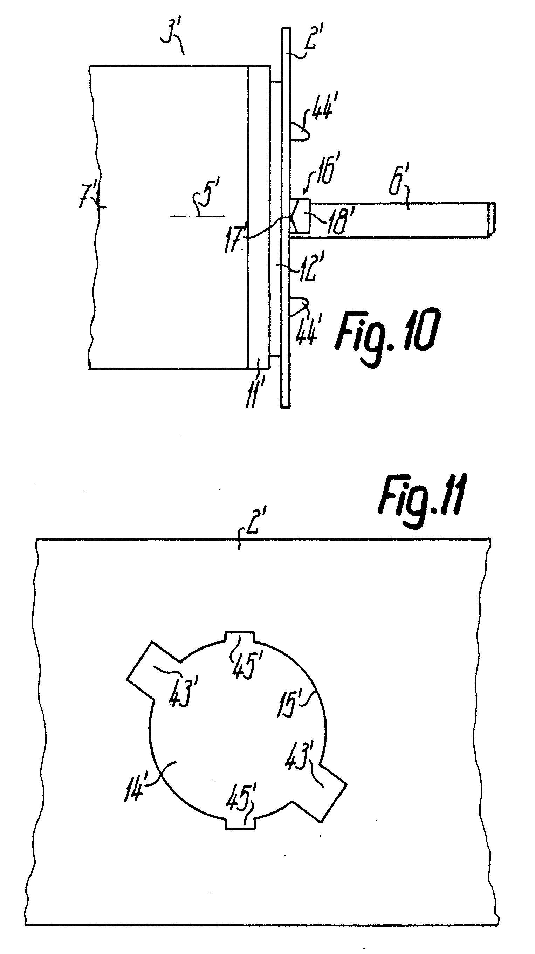

Durch die Ausbildung nach den Fig. 8 bis 15 wird eine Befestigungsvorrichtung geschaffen, die bei hoher Haltekraft für die Einrichtung auch im Bereich der Stützfläche des Spanngliedes unter den zu erwartenden Toleranz- und Maßunterschieden jeweils besonders gut eine gleichmäßige Verteilung der Flächenpressung gewährleistet.

Wie die Fig. 8 bis 15 zeigen, weist die Befestigungsvorrichtung 1' einen außerhalb der eigentlichen Halteglieder ebenen Befestigungsflansch bzw. Gehäusedeckel 11' oder dgl. auf. Der Innendurchmesser des Haltegliedes 12' bzw. der Anlagefläche 13' ist größer als der Durchbruch 14' im Bereich seiner kreisförmigen Begrenzung 15'. Die Stellspindel 6' durchsetzt auch eine Durchführungs-Öffnung im Gehäusedeckel 11', die wesentlich kleiner als der Durchmesser des Durchbruches 14' ist, wobei die Stellspindel 6' innerhalb des Körpers 7' mechanisch mit den zugehörigen Schalt- bzw. Regelgliedern verbunden ist.

Am Gehäusedeckel 11' sind radial innerhalb des Haltegliedes 12' zwei weitere, einander beiderseits der Mittelachse 5' gegenüberliegende Halteglieder in Form von annähernd rechtwinklig Z-förmigen Spanngliedern 16' vorgesehen, welche über den Gehäusedeckel 11' sowie die Armaturenplatine 2' bzw. die Anlagefläche 13' nach außen vorstehen und mit Stützflächen 17' unter rechtwinklig zur Wandebene 4' gerichteter Vorspannung anliegen. Dadurch ist die Einrichtung 3' einerseits in Richtung der Mittelachse 5' und andererseits im wesentlichen auch rechtwinklig zur Mittelachse 5' vollständig spielfrei gegenüber der Armaturenplatine 2' festgelegt. wobei die Haltekräfte so groß gewählt werden, daß zwischen Einrichtung 3' und Armaturenplatine 2' auch unter den üblichen Betriebsbedinungen keine Relativbewegungen stattfinden können.

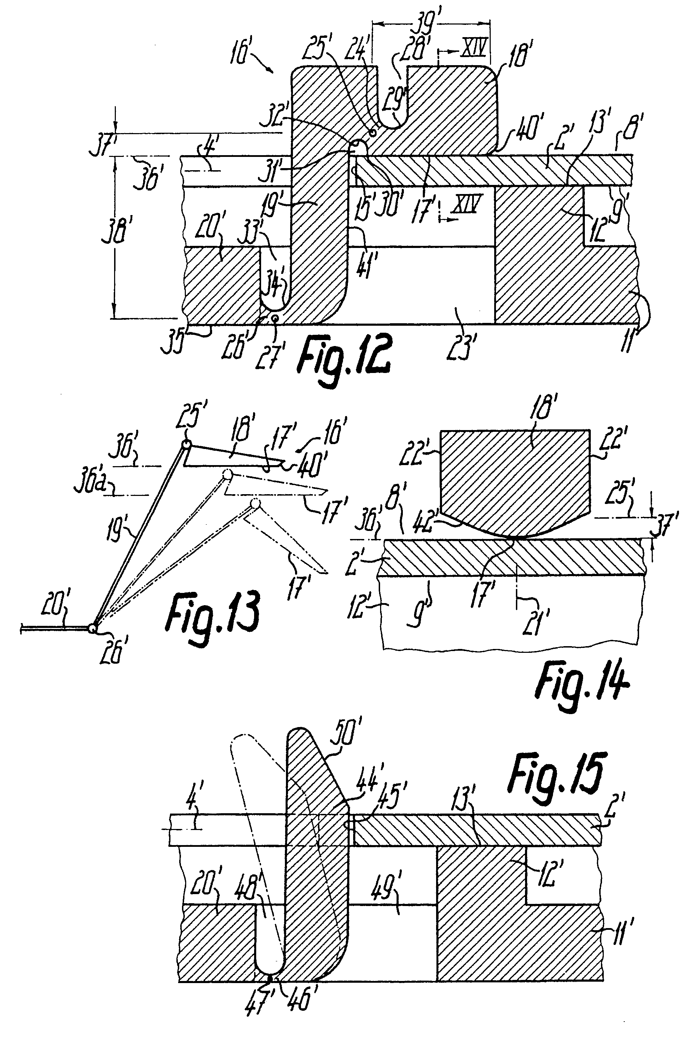

Wie insbesondere die Fig. 12 bis 14 zeigen, weist das jeweilige Spannglied 16' einen an der äußeren Seite 8' der Armaturenplatine 2' liegenden Kopf-Abschnitt 18', einen an der inneren Seite 9' liegenden, zum Abschnitt 18' im wesentlichen parallelen Abschnitt 20' und einen diese beiden Abschnitte 18', 20' verbindenden Zwischen-Abschnitt 19' auf. Die Abschnitte 18' und 19' sind von gemeinsamen, zueinander parallelen und symmetrisch beiderseits einer Axialebene 21' der Befestigungsvorrichtung liegenden Seitenflächen 22' begrenzt, während der Ab schnitt 20' durch den um die Mittelachse 5' geschlossenen, plattenförmigen Mittelteil des Gehäusedeckels 11' gebildet und lediglich von der Durchführungsöffnung für die Stellspindel 6' durchbrochen ist. In zur Mittelachse 5' paralleler Ansicht ist jedes Spannglied 16' von einer fensterartigen Öffnung 23' im Gehäusedeckel 11' umrahmt, die bis an die Innenfläche des Haltegliedes 12' reicht und deren seitliche, zur Axialebene 21' parallele Begrenzungsflächen unmittelbar benachbart zu den zugehörigen Zonen der Seitenflächen 22' des Abschnittes 19' liegen, so daß das Spannglied 16' an diesen seitlichen Begrenzungsflächen gegen seitliche Belastungen gleitbar abgestützt ist.

Der äußere, die Anlagefläche 17' aufweisende Abschnitt 18' des Spanngliedes 16' geht über eine, eine ideelle Gelenkachse 25' definierende Gelenkzone 24' in den Abschnitt 19' über, der seinerseits über eine Gelenkzone 26' in den Abschnitt 20' übergeht, welche eine ideelle Gelenkachse 27' definiert. Die Gelenkachsen 25',27' liegen gemäß Fig. 12 rechtwinklig zur gleichen Ebene und sind in dieser Darstellung durch Nullen-Kreise angedeutet.

Die Gelenkzonen 24',26' sind nach Art von Filmgelenken durch Zonen gebildet, die gegenüber den benachbarten Abschnitten 18' bis 20' im Querschnitt stark reduziert sind. Im Falle der Gelenkzone 24' ist an der von der Anlagefläche 17' abgekehrten, zur Wandebene 4' parallelen Seite des Abschnittes 18' im Übergangsbereich zwischen diesem Abschnitt und dem Abschnitt 19' eine gegenüber ihrer Breite wesentlich tiefere Nut 28' vorgesehen, die über den größten Teil der Höhe des Abschnittes 18' reicht, sich parallel zur Gelenkachse 25' erstreckt und zur Begrenzung der Gelenkzone 24' an der zugehörigen Seite eine im Querschnitt halbkreisförmig ausgerundete Bodenfläche 29' aufweist. Auf der Seite der Anlagefläche 17' ist zwischen deren zugehöriger Begrenzung 30' und der der Anlagefläche 17' zugekehrten Seite des Abschnittes 19' ein nutförmiger Einstich 31' vorgesehen, der wesentlich weniger tief als die Nut 28' und dessen Nutbreite gegenüber der Nut 28' kleiner ist. Der zur Gelenkachse 25' parallele Einstich 31' liegt gemäß Fig. 12 mit einer Innenflanke in der Ebene der der Anlagefläche 17' zugekehrten Seite des Abschnittes 19' und kann gemäß Fig. 8 demgegenüber auch radial nach außen versetzt sein. Der Einstich 31' ist vom freien Ende des Abschnittes 18' weg gegenüber der Nut 28' mindestens etwa um deren Breite versetzt und weist zur Begrenzung der Gelenkzone 24' auf der der Bodenfläche 29' gegenüberliegenden Seite ebenfalls eine halbkreisförmig ausgerundete Bodenfläche 32' auf. Durch die beschriebene Ausbildung nimmt der Querschnitt der Gelenkzone 24' bis zu einem Bereich geringsten Querschnittes von beiden Seiten her ab, wobei die Mittelebene durch diesen Bereich geringsten Querschnittes unter einem sich in Richtung zum freien Ende des Abschnittes 18' öffnenden Winkel von beispielsweise etwa 45° gegenüber der Wandebene 4' liegt.

Zur Bildung der Gelenkzone 26' ist an der vom Abschnitt 18' abgekehrten Seite des Abschnittes 19' in der Außenseite des Gehäusedeckels 11' eine Nut 33' vorgesehen, deren Mittelebene wie die des Einstiches 31' parallel zur Gelenkachse 27' liegt und eine Axialebene dieser Gelenkachse bildet. Auch diese Nut 33', die im wesentlichen gleiche Breite und Tiefe wie die Nut 28' aufweist, ist zur Begrenzung der Gelenkzone 26' mit einer ausgerundeten Bodenfläche 34' versehen. An der von der Nut 33' abgekehrten Seite ist die Gelenkzone 26' von der zugehörigen, vom Abschnitt 18 abgekehrten Fläche 35' des Gehäusedeckels 11' begrenzt, die in diesem Bereich oder durchgehend über den gesamten Gehäusedeckel 11' eben ausgebildet ist und rechtwinklig zur Mittelachse 5' liegt. Die Gelenkzone 26' liegt also wesentlich näher bei der vom Abschnitt 18' abgekehrten Seite des Gehäusedeckels 11' als bei dessen anderer Seite bzw. unmittelbar anschließend an die durch die Fläche 35' gebildete Seite. Die eine Seitenflanke der Nut 33' liegt in einer Ebene mit der vom Abschnitt 18' abgekehrten Seite des Abschnittes 19' und bildet einen Teil von dessen zugehöriger Außenfläche.

Durch die beschriebene Ausbildung liegen die beiden Gelenkachsen 25',27' beiderseits der Wandebene 4' bzw. der zu dieser parallelen Anlageebene 36' der Anlagefläche 17'. Der Abstand 37' der Gelenkachse 25' von der Anlageebene 36' ist dabei wesentlich kleiner als der entsprechende Abstand 38' der Gelenkachse 27'. Die beiden Gelenkachsen 25',27' liegen auch rechtwinklig zu ihrer Längsausrichtung und parallel zur Anlageebene 36' um ein Maß versetzt zueinander, das jedoch kleiner, nämlich etwa um die Hälfte kleiner als ihr Abstand 37',38' voneinander ist. Die Gelenkachse 25' liegt dabei näher bei der Mitte der Anlagefläche 17' als die Gelenkachse 27'. In Ansicht rechtwinklig auf die Anlageebene 36' liegt die Gelenkachse 25' innerhalb der beiden radialen End-Begrenzungen der Anlagefläche 17' unmittelbar benachbart zu der dem Abschnitt 19' zugekehrten Begrenzung 30', so daß also die Anlagefläche 17' in diesem Bereich über die Gelenkzone 24' rechtwinklig zur Anlageebene 36' unmittelbar angepreßt wird, während der übrige, an dem nach Art eines frei ausragenden Armes ausgebildeten Abschnitt 18' vorgesehene Bereich der Anlagefläche 17' eine weitere Abstützung bildet, über welche sich die Spannkraft verteilt. Der Abschnitt 18' und der Abschnitt 19' sind im Querschnitt so stark dimensioniert, daß sie in sich praktisch nicht federnd sind, wobei jedoch der Teil des Abschnittes 18', der auf der von der Mittelebene der Nut 28' abgekehrten Seite des Abschnittes 19' liegt, eine geringe federnde Beweglichkeit um eine in dieser Mittelebene liegende Achse aufweisen und so ausgebildet sein kann, daß die Anlagefläche 17' in entspanntem Zustand eine geringe konkave Wölbung hat, deren Scheitel etwa in der Mittelebene der Nut 28' liegt; in Befestigungslage wird diese Wölbung unter den auftretenden Spannkräften begradigt, so daß die Anlagefläche 17' über ihre gesamte, zu den Gelenkachsen 25',27' radiale Erstreckung 39' gleichmäßig anliegt. Die auf diese Weise gebildete weitere Gelenkzone ist also mit der Gelenkzone 24' integriert, gegenüber dieser in ihrer Federkraft wesentlich steifer sowie zum freien Ende der Anlagefläche 17' geringfügig versetzt wird. Die Mittelebene der Nut 28' liegt zwischen den Begrenzungen der Anlagefläche 17'. Am freien Ende ist der Abschnitt 18' mit einer an die Anlagefläche 17' anschließenden Abschrägung oder Abrundung 40' versehen, so daß der Abschnitt 18' während der Montage bei Schräglagen gegenüber der Armaturenplatine 2' weich im Bereich dieser Abrundung 40' oder dgl. abgestützt ist. Der Abstand der radial äußeren Fläche 41' des Abschnittes 19' von der Mittelachse 5' ist um so viel kleiner als die zugehörigen Abschnitte der Begrenzung 15' des Durchbruches 14' von dieser Mittelachse 5', daß die Fläche 41' für die Beweglichkeit des Abschnittes 19' in Längsrichtung der Anlagefläche 17' stets einen ausreichenden Abstand von der Begrenzung 15' hat; andererseits ist dieser zuletzt genannte Abstand sehr klein gehalten, nämlich kleiner als der Abstand der Begrenzung 30' von der Fläche 41'. In Axialansicht der Mittelachse 5' gesehen, reicht das freie Ende der Anlagefläche 17' nur etwa bis an die radial innere Begrenzung der Anlagefläche 13', so daß unter den auftretenden Spannkräften innerhalb geringer Grenzen auch eine federnde Mitwirkung der Armaturenplatine 2' möglich ist, da diese unmittelbar der Anlagefläche 17' gegenüberliegend nicht abgestützt ist.

Wie Fig. 14 zeigt, ist die Anlagefläche 17' im Querschnitt symmetrisch zur Axialebene 21' gewölbt, wobei der gewölbte Bereich an beiden Seiten kontinuierlich bzw. tangential in eine von der Anlageebene 36' unter einem spitzen Winkel wegverlaufenden Flanke 42' übergeht, die bis zur zugehörigen Seitenfläche 22' reicht. In Fig. 13 ist die Hebelgeometrie des Spanngliedes 16' schematisch dargestellt. Mit ausgezogenen Linien ist eine Befestigungslage des Abschnittes 18' gezeigt, in welcher die Anlagefläche 17' in der Anlageebene 36' liegt. Eine weitere Befestigungslage ist strichpunktiert angedeutet, in welcher die Anlagefläche des Abschnittes 18' in einer anderen Befestigungslage in der Anlageebene 36a' liegt, die beispielsweise dadurch gegenüber der Anlageebene 36' versetzt ist, daß die Armaturenplatine 2' durch Toleranzunterschiede in ihrer Dicke eine geringere Dicke aufweist, wobei dieser Unterschied in Fig. 13 übertrieben groß dargestellt ist. In allen Befestigungslagen kann die Anlagefläche 17', die im wesentlichen ausschließlich über zwei Gelenkachsen mit dem Abschnitt 20' gelenkig verbunden ist, parallel zu jeder anderen möglichen Befestigungslage liegen oder sie liegt in Anpassung an die Gegenfläche schräg dazu. Zwischen den Anlageebenen 36',36a' führt die Anlagefläche 17' eine kleine Relativbewegung in ihrer Längsrichtung aus. Innerhalb des maximalen Abstandes zwischen den Anlageebenen 36',36a', für welche das Spannglied 16' ausgelegt ist, sind die Bewegungswinkel im Bereich beider Gelenkzonen 24',26' im wesentlichen gleich sowie sehr klein, wodurch auch die jeweils auftretenden Spannkräfte etwa gleich so groß sind. In Fig. 13 ist ferner strich-doppelpunktiert der entspannte Zustand des Spanngliedes 16' übertrieben stark ausgelenkt dargestellt, in welchem der Abschnitt 18' mit der Anlagefläche 17' nicht mehr planparallel zu den Befestigungslagen liegt, sondern gegenüber der Verbindungsgeraden zwischen den Gelenkachsen 25',26' demgegenüber einen kleineren Winkel einschließt, so daß er bei Erreichen der Befestigungslage gegenüber dem Abschnitt 19' bereits eine relativ hohe Vorspannung hat.

Die beiden Spannglieder 16' werden von der inneren Seite 9' der Armaturenplatine 2' bajonettverschlußartig in Eingriff mit der Armaturenplatine 2' gebracht. Zu diesem Zweck ist für jedes Spannglied 16' in der Begrenzung 15' des Durchbruches 14' ein an dieses Spannglied 16' angepaßter rechteckiger Ausschnitt 43' vorgesehen, der jeweils annähernd bis in den Bereich der Anlagefläche 13' reicht. Nach dem Durchfahren der Ausschnitte 43' mit den Abschnitten 18' der Spannglieder 16' werden diese um die Mittelachse 5' gegenüber der Armaturenplatine 2' ge mäß den Fig. 9 und 11 linksdrehend um einen spitzen Winkel von beispielsweise etwa 30° verdreht. Hierbei läuft die in Drehrichtung vordere Flanke 42' jedes Spanngliedes auf die zugehörige Begrenzung des Ausschnittes 43' auf, so daß der Abschnitt 18' unter Aufbau der Vorspannung um die zugehörigen Gelenkachsen 25',27' ausgelenkt wird und seine Anlagefläche 17' auf die zugehörige Seite 8' der Armaturenplatine 2' gelangt, so daß die Einrichtung 3' axial formschlüssig und in Drehrichtung zumindest kraftschlüssig gesichert ist.

Zur ebenfalls formschlüssigen Sicherung der Einrichtung 3' in Drehrichtung sind zwei Rastglieder 44 an der Einrichtung 3' vorgesehen, die einteilig mit den Spanngliedern 26' bzw. dem Gehäusedeckel 11' ausgebildet und gegenüber den Spanngliedern 16' um die Mittelachse 5' um 90° versetzt sind. Für die Aufnahme dieser Rastglieder 44' sind in der Begrenzung 15' des Durchbruches 14' zwei rechteckig begrenzte Rastausnehmungen 45' vorgesehen, in welche die Rastglieder 44' ausschließlich in Drehrichtung formschlüssig eingreifen. Jedes Rastglied 44' ist gemäß Fig. 15 nach Art einer über den Gehäusedeckel 11' etwa parallel zur Mittelachse 5' vorstehenden Federzunge ausgebildet, die etwa gleich weit wie die Spannglieder 16' vorsteht und über eine im Querschnitt geschwächte Gelenkzone 46' einteilig in den Abschnitt 20' bzw. den Gehäusedeckel 11' übergeht. Die Gelenkzone 46' ist durch die ausgerundete Bodenfläche einer Nut 48' begrenzt, welche an derselben Seite wie die Nuten 33' im Gehäusedeckel 11' vorgesehen ist, so daß auch die, eine Gelenkachse 47' definierende Gelenkzone 46' etwa in der zur Mittelachse 5' rechtwinkligen Axialebene der Gelenk achse 27' an der von der Anlageebene 36' abgekehrten Seite des Gehäusedeckels 11' liegt. Auch das Rastglied 44' liegt auf einem Teil seiner an die Gelenkzone 46' anschließenden Länge seitlich geführt in einer der Öffnung 23' entsprechenden Öffnung 49' des Gehäusedeckels 11', wobei der Radialabstand der Gelenkachse 47' von der Mittelachse 5' größer als der der Gelenkachse 27' ist. An der von der Mittelachse 5' abgekehrten Seite weist das Rastglied 44' im Bereich seines freien Endes eine Auflaufschräge 50' auf, mit welcher das Rastglied 44' beim Einsetzen in die Armaturenplatine 2' auf die Begrenzung 15' des Durchbruches 14' aufläuft, so daß sie um die Gelenkachse 47' federnd in die in Fig. 15 strichpunktiert angedeutete Lage nach innen gedrückt wird. Beim Drehen der Einrichtung 3' gleitet das Rastglied 44' dann mit seiner von der Mittelachse 5' abgekehrten Fläche entlang der Begrenzung 15', bis es in den Verriegelungseingriff in die zugehörige Rastausnehmung 45' springt. Sowohl die Abschnitte 18' als auch die in Befestigungslage über die äußere Seite 8' der Armaturenplatine 2' vorstehenden Enden der Rastglieder 44' bilden Handhaben, die nach Entfernen des Betätigungsknopfes 10' von der äußeren Seite 8' der Armaturenplatine 2' zugänglich sind, um einerseits die Rastglieder 44' außer Verriegelungseingriff zu bringen und andererseits die Spannglieder 16' durch Drehen um die Mittelachse 5' in den Bereich der Ausschnitte 43' zu bewegen, so daß die Einrichtung 3' praktisch von der Außenseite der Armaturenplatine 2' gelöst werden kann. Die Rastglieder 44' liegen ebenfalls mit radialem Abstand von der radial inneren Begrenzung der Anlagefläche 13'.

**Ansprüche**

1. Befestigungsvorrichtung zur Halterung von Funktionsgeräten, wie Bedienungsgeräten, elektrischen Leistungssteuer-Schalt-Einrichtungen oder dgl., im Bereich eines Durchbruches (11, 14') an einer Armaturen-Platine (3, 2'), wie einer Geräteblende oder dgl., mit an beiden Seiten der Armaturen-Platine abzustützenden und mit dem Gerätekörper (4, 7') in einer Riegelbewegung in Befestigungseingriff zu bringenden Haltegliedern (8, 9; 12', 16'), die zur Abstützung Stützflächen (24, 25; 17) aufweisen, wobei mindestens ein als Spannglied (9, 16') ausgebildetes Halteglied an einem in Befestigungslage den Durchbruch (11, 14') durchsetzenden Schaft-Abschnitt (17, 19') einen Kopf-Abschnitt (10, 18') aufweist, der mindestens eine der Stützflächen (24, 25; 17) bildet, die in Befestigungslage mit Vorspannung anliegt, dadurch gekennzeichnet, daß der Schaft-Abschnitt (17, 19') mindestens eines Spanngliedes in Befestigungslage quer zur inneren Begrenzung (26, 27; 15') des Durchbruches (11, 14') sowie quer zur Riegelbewegung wenigstens geringfügig beweglich am Gerätekörper (4, 7') angeordnet ist und daß das Spannglied (19, 16') zur selbsteinstellenden Verteilung der Spannkraft über die Stützfläche (24, 25; 17) gegenüber der Platine (3, 2') unter der angreifenden Stützkraft nach Art mindestens einer Gelenkzone in sich federnd beweglich ist.

2. Vorrichtung, nach Anspruch 1, dadurch gekennzeichnet, daß das Spannglied (9) in Befestigungslage mit Stützflächen (24,25) des Kopfes (10) beiderseits einer Mittelebene (20) im Bereich der zugehörigen Seite (35) der Platine (3) benachbart zur Durchtrittsöffnung (11) in der zur Platine etwa rechtwinkligen Hauptspannrichtung mit Vorspannung anliegt, daß der Kopf (10) des Spanngliedes (9) mit unterschiedlich ausgebildeten Stützflächen (24,25) an den beiden einander gegenüberliegenden Seiten der Durchtrittsöffnung (11) an der Platine (3) anliegt und daß die Lage der Stützflächen (24,25) gegenüber der zwischen ihnen liegenden Mittelebene (20) von der spiegelsymmetrischen Lage derart abweicht, daß mindestens eine Stützfläche (24) einer quer zur Hauptspannrichtung liegen-den Spannkraftkomponente ausgesetzt ist.

3. Vorrichtung, nach Anspruch 1 oder 2, dadurch gekennzeichnet, daß mindestens eine Begrenzungskante (38) der Kantenfläche (26) der Durchtrittsöffnung (11) wenigstens eine Schneide für das Eindringen in die zugehörige Stützfläche (24) des Spanngliedes (9) bildet.

4. Vorrichtung, nach einem der vorhergehenden Ansprüche, dadurch gekennzeichnet, daß das Spannglied (16') in seiner Feder-Vorspannrichtung um eine Gelenkachse (25', 27') einer Gelenkzone (24',26') beweglich am Gerätekörper (7') angeordnet ist und daß mindestens ein Spannglied (16') für die in Befestigungslage wenigstens teilweise außerhalb der Begrenzung (15') des Durchbruches (14') an der zugehörigen Seite (8') der Armaturenplatine (2') liegenden Anlage ausgebildet ist und zur selbstausgleichenden Anlage über die zur Gelenkachse (25',27') seiner Gelenkzone (24', 26') quer liegende Erstreckung (39') seiner Stützfläche (17') gegenüber dem Körper (7') der Einrichtung (3') um mindestens eine weitere, im Abstand (37',38') zur anderen Gelenkzone (24',26') liegende Gelenkzone (24',26') federnd schwenkbeweglich ist.

5. Vorrichtung, nach einem der vorhergehenden Ansprüche, dadurch gekennzeichnet, daß mindestens eine, als Querspannfläche vorgesehene, Stützfläche (24) eine insbesondere für die Anlage an der zugehörigen Begrenzungskante (38) der Kantenfläche (26) der Durchtrittsöffnung (11) vorgesehene Keilfläche (36) aufweist, die vorzugsweise zur Mittelebene (20) unter einem sich zum Ende (32) des Kopfes (10) öffnenden spitzen Winkel liegt, wobei insbesondere beide Stützflächen (24,25) Keilflächen (36,37) aufweisen, deren größter Abstand voneinander größer als die zugehörige Weite der Durchtrittsöffnung (11) ist und wobei vorzugsweise ferner die der Querspannfläche gegenüberliegende Keilfläche (37) gegenüber der Mittelebene (20) in einem kleineren Winkel liegt.

6. Vorrichtung, nach einem der vorhergehenden Ansprüche, dadurch gekennzeichnet, daß mindestens eine als Hauptspannfläche vorgesehene Stützfläche (25) eine Schulterfläche (29) aufweist, die vorzugsweise für die Abstützung an der zugehörigen Seite (35) der Platine (3) nur im Abstand außerhalb der zugehörigen Begrenzungskante (39) der Durchtrittsöffnung (11) ausgebildet ist.

7. Vorrichtung, nach einem der vorhergehenden Ansprüche, dadurch gekennzeichnet, daß der den Kopf (10) tragende Schaft (17) des Spanngliedes (9) in sich und/oder in seiner Verbindung mit einem Sockelkörper (16), insbesondere in der Querspannrichtung, elastisch federnd verformbar ausgebildet ist, daß vorzugsweise der Schaft (17) des Spanngliedes (9) am Schaftfuß einen Fußsteg (23) bildet, der nur an beiden Enden mit dem Sockelkörper (16) einteilig verbunden ist und daß der insbesondere plattenförmige Sockelkörper (16) beiderseits des Spanngliedes (9), insbesondere beiderseits der Mittelebene (20), von Schlitzen (21,22) durchsetzt ist, die vorzugsweise im wesentlichen vom Kopf (10) überdeckt sind.

8. Vorrichtung, nach einem der vorhergehenden Ansprüche, dadurch gekennzeichnet, daß auf beiden Seiten des Kopfes (10) des Spanngliedes (9) in der Hauptspannrichtung gegeneinander versetzte Schulterflächen (28,29) vorgesehen sind, von denen insbesondere mindestens eine gegenüber der Mittelebene (20) in einer Kipplage, vorzugsweise beide etwa in einer gemeinsamen Ebene, vorgesehen sind, daß insbesondere das Spannglied (9) im Querschnitt im wesentlichen T-förmig ist und daß vorzugsweise der Übergang zwischen dem T-Schaft (17) und mindestens einer Schulterfläche (28 bzw. 29) durch die zugehörige Keilfläche (36 bzw. 37) gebildet ist.

9. Vorrichtung, nach einem der vorhergehenden Ansprüche, dadurch gekennzeichnet, daß die Gelenkachsen (25',27') der Gelenkzonen (24',26') des Spanngliedes (16') wenigstens annähernd parallel zueinander und vorzugsweise parallel zur Wandebene (4') der Armaturenplatine (2') und/ oder rechtwinklig zu einer Axialebene (21') des Durchbruches (14') liegen, daß ferner vorzugsweise die Gelenkachsen (25',27') der Gelenkzonen (24',26') quer zur Wandebene (4') der Armaturenplatine (2') in einem Abstand voneinander liegen, der insbesondere mehrfach größer als die Dicke der Armaturenplatine (2') ist, daß ferner vorzugsweise eine Gelenkachse (25') nahe bei der Anlageebene (36') der Stützfläche (17') des Spanngliedes (16'), insbesondere mit geringem Abstand (37') von der Anlageebene (36') in bezug auf die zugehörige Seite (8') der Armaturenplatine (2') nach außen versetzt und/oder - in Spannrichtung gesehen - mindestens im Bereich der der Begrenzung (15') zugekehrten Begrenzung (30') der Stützfläche (17') oder zwischen beiden zugehörigen Begrenzungen der Stützfläche (17') liegt, daß ferner vorzugsweise eine Gelenkachse (27') der Stützfläche (17') des Spanngliedes (16') mit Abstand (38') gegenüberliegt, insbesondere an der inneren Seite (9') der Armaturenplatine (2') vorgesehen ist, daß ferner vorzugsweise die Gelenkachsen (25',27') der Gelenkzonen (24', 26') des Spanngliedes (16') parallel zur Wandebene (4') der Armaturenplatine (2') gegeneinander versetzt sind, wobei insbesondere die näher bei der Anlagefläche (47') des Spanngliedes (16') liegende Gelenkachse (25') in bezug auf die Mittelachse (5') des Durchbruches (14') radial nach außen gegenüber der anderen Gelenkachse (27') versetzt ist, daß ferner vorzugsweise mindestens eine Gelenkzone (24',26') einteilig mit den anschließenden Abschnitten (18',19',20') des Spanngliedes (16') ausgebildet, durch eine im Querschnitt gegenüber den benachbarten Bereichen reduzierte Zone gebildet und insbesondere von der ausgerundeten Bodenfläche (29',32'; 34') wenigstens einer Nut (28', 31', 33') begrenzt ist, wobei das Spannglied (16') insbesondere aus einem Werkstoff mit hoher Federsteifigkeit besteht, daß ferner vorzugsweise die Stützfläche (17') mindestens eines Spanngliedes (16') gegenüber dessen zum Gerätekörper (7') anschließenden Abschnitt (19') durch einen vertieften Einstich (31') abgesetzt ist, der insbesondere eine Begrenzung der zugehörigen Gelenkzone (24') bildet und/oder gegenüber der zugehörigen Nut (28') seitlich versetzt ist, daß ferner vorzugsweise mindestens ein Spannglied (16') nach Art einer etwa rechtwinklig Z-förmigen Spannpratze und insbesondere einteilig wenigstens mit einem Teil eines den Gerätekörper (7') bildenden Gehäuses, insbesondere mit einem Gehäusedeckel (11') und/oder mit dem auf der anderen Seite (9') der Armaturenplatine (2') abzustützenden Halteglied (12') ausgebildet ist, und daß ferner vorzugsweise die Stützfläche (17') mindestens eines Spanngliedes (16') im zu mindestens einer Gelenkachse (25', 27') etwa parallelen Querschnitt annähernd schneidenlagerartig begrenzt, insbesondere konvex gewölbt und/oder an mindestens einer Seite von einer schrägen Flanke (42') begrenzt ist und insbesondere sich radial zur Mittelachse (5') des Durchbruches (14') erstreckt.

10. Vorrichtung, nach einem der vorhergehenden Ansprüche, dadurch gekennzeichnet, daß die Durchtrittsöffnung (11) bajonettverschlußartig einen mindestens auf die Weite des Kopfes (10) des Spanngliedes (9) erweiterten Einführabschnitt (12) und einen an diesen anschließenden, gegenüber der Weite des Kopfes (10) verengten Sperrabschnitt (13) für den drehend oder translatorischen Eingriff des Spanngliedes (9) aufweist, wobei das Spannglied (9) und die Platine (3) insbesondere um eine im Abstand vom Spannglied (9) liegende Betätigungsachse (7) drehbar ineinandergreifen und vorzugsweise mindestens eine Keilfläche (36,37) etwa um diese Betätigungsachse (7) gekrümmt ist und/oder die Hauptspannfläche (25) an der von der Betätigungsachse (7) abgekehrten Seite des Kopfes (10) liegt.

11. Vorrichtung nach einem der vorhergehenden Ansprüche, gekennzeichnet durch mindestens ein Sicherungsglied für die Befestigungslage des Spanngliedes (9), wobei vorzugsweise am Sockelkörper (16) ein federnd ausrückbarer Sicherungsnocken (43) für den Eingriff in eine Sicherungsöffnung (44) der Platine (3) vorgesehen ist.

## Claims

1. Fastening mechanism for mounting operating equipment, such as control equipment, electric power control switching means or the like, in the vicinity of an opening (11, 14') on a panel (3, 2'), such as an equipment shield or the like, with holding members (8, 9; 12', 16') supported on either side of the panel and to be brought into fastening engagement in a bolt movement with the equipment body (4, 7') and which for support purposes have supporting surfaces (24, 25; 17) and in which at least one holding member constructed as a tension member (9, 16') has on a shaft portion (17, 19') passing through the opening (11, 14') in the fastening position a head portion (10, 18'), which forms at least one of the supporting surfaces (24, 25; 17') engaging with pretension in the fastening position, characterized in that the shaft portion (17, 19') of at least one tension member is arranged so as to be at least slightly movable on the equipment body (4, 7') in the fastening position and at right angles to both the inner boundary (26, 27; 15') of the opening (11, 14') and to the bolt movement and that for the self-setting distribution of the tension over the supporting surface (24, 25; 17) the tension member is resiliently movable in the manner of at least one articulation zone with respect to the panel (3, 2') under the supporting force applied.

2. Mechanism according to claim 1, characterized in that in the fastening position the tension member (9) with the supporting surfaces (24, 25) of the head (10) engages with pretension on either side of a median plane (20) in the vicinity of the associated side (35) of the panel (3) adjacent to the passage opening (11) in a main tension direction approximately at right angles to the panel, that the heed (10) of the tension member (9) engages with differently constructed supporting surfaces (24, 25) on the two facing sides of the passage opening (11) on the panel (3) and that the position of the supporting surfaces (24, 25) with respect to the median plane (20) located between them differs in such a way from the mirror symmetrical position that at least one supporting surface (24) is exposed to a tension component at right angles to the main tension direction.

3. Mechanism according to claims 1 or 2, characterized in that at least one boundary edge (38) of the edge face (26) of the passage opening (11) forms at least one cutting edge for the penetration of the associated supporting surface (24) of the tension member (9).

4. Mechanism according to one of the preceding claims, characterized in that, in its spring pretensioned direction, the tension member (16') is movably arranged on the equipment body (7') about an articulation axis (25', 27') of an articulation zone (24', 26') and that at least one tension member (16') is constructed for engagement on the associated side (8') of the panel (2') which is at least partly located outside the boundary (15') of the opening (4') in the fastening position and for self-compensating engagement over the extension of its supporting surface (17') at right angles to the articulation axis (25', 27') of its articulation zone (24', 26') with respect to the body (7') of the means (3') is resiliently pivotable about at least one further articulation zone (24', 26') spaced (37', 38') from the first articulation zone (24', 26').

5. Mechanism according to one of the preceding claims, characterized in that at least one supporting surface (24) provided as a transverse tension surface has a wedge face (36) for engaging on the associated boundary edge (38) of the edge face (26) of the passage opening (11) and preferably with respect to the median plane (20) is at an acute angle opening towards the end (32) of the head (10) and in particular both supporting surfaces (24, 25) have wedge faces (36, 37), whose maximum reciprocal spacing is greater than the associated width of the passage opening (11) and in which preferably the wedge face (37) facing the transverse tension face is at a smaller angle with respect to the median plane (20).

6. Mechanism according to one of the preceding claims, characterized in that at least one supporting surface (25) provided as a main tension face has a shoulder face (29), which is preferably constructed for supporting on the associated side (35) of the panel (3) is constructed spaced outside the associated boundary edge (39) of the passage opening (11).

7. Mechanism according to one of the preceding claims, characterized in that the shaft (17) of the tension member (9) carrying the head (10) is constructed in elastically resiliently deformable manner in itself and/or in its connection with a base member (16), particularly in the transverse tension direction, that preferably the shaft (17) of the tension member (9) forms at the shaft base a bar (23) only connected in one piece with the base member (16) at both ends and that the in particular plate-like base member (16) is traversed by slots (21, 22) on either side of the tension member (9) and in particular on either side of the median plane (20) and which are preferably substantially covered by the head (10).

8. Mechanism according to one of the preceding claims, characterized in that on either side of the head (10) of the tension member (9), shoulder surfaces (28, 29) displaced with respect to one another in the main tension direction are provided and whereof at least one of said shoulder surfaces is in a tilted position with respect to the median plane (20) and preferably both are in a common plane, that in particular the tension member (9) is substantially T-shaped in cross-section and that preferably the transition between the T-shaft (17) and at least one shoulder surface (28 or 29) is formed by the associated wedge face (36 or 37).

9. Mechanism according to one of the preceding claims, characterized in that the articulation axes (25', 27') of the articulation zones (24', 26') of the tension member (16') are at least approximately parallel to one another and preferably parallel to the wall plane (4') of the panel (2') and/or at right angles to an axial plane (21') of the opening (14'), that preferably the articulation axes (25', 27') of the articulation zones (24', 26') are positioned at right angles to the wall plane (4') of the panel (2') with a spacing several times larger than the thickness of the panel (2'), that preferably one articulation axis (25') close to the bearing plane (36') of the supporting surface (17') of the tension member (16'), particularly with a limited spacing (37') from the bearing plane (36') is outwardly displaced relative to the associated side (8') of the panel (2') and/or, considered in the tension direction, is located at least in the vicinity of the boundary (30') of the supporting surface (17') facing the boundary (15') or between both the associated boundaries of the supporting surface (17'), that preferably one articulation axis (27') faces the supporting surface (17') of the tension member (16') with the spacing (38') and is in particular provided on the inside (9') of the panel (2'), that preferably the articulation axes (25', 27') of the articulation zones (24', 26') of the tension member (16') are reciprocally displaced parallel to the wall plane (4') of the panel (2') and in particular the articulation axis (25') closer to the bearing surface (47') of the tension member (16') is radially outwardly displaced with respect to the median axis (5') of the opening (14') compared with the other articulation axis (27'), that preferably at least one articulation zone (24', 26') is constructed in one piece with the connecting portions (18', 19', 20') of the tension member (16'), is formed by a cross-sectionally reduced zone compared with the adjacent areas and is in particular bounded by the rounded base surface (29', 32'; 34') of at least one groove (28', 31', 33') and the tension member (16') is in particular made from a material having a high spring rigidity, that preferably at least one tension member (16') is offset by a depressed recess (31') with respect to an adjacent portion (19') following on to the equipment body (7'), the recess in particular forming a boundary of the associated articulation zone (24') and/or is laterally displaced with respect to the associated groove (28'), that preferably at least one tension member (16') is constructed in the manner of a substantially right-angled Z-shaped tension means and is in one piece with at least part of a casing forming the equipment body (7') and in particular with a casing cover (11') and/or with the holding member (12') supported on the other side (9') of the panel (2') and that preferably the supporting surface (17') of at least one tension member (16') in its cross-section parallel to at least one articulation axis (25', 27') is bounded in an approximately knife edge support-like manner, the supporting surface being convexly curved and bounded on at least one side by a sloping flank (42') and in particular extends radially to the central axis (5') of the opening (14').

10. Mechanism according to one of the preceding claims, characterized in that the passage opening (11) has in bayonet catch-like manner an insertion portion (12) widened at least to the width of the head (10) of the tension member (9) and a retaining portion (13) following onto the insertion portion and narrowed with respect to the width of the head (10) for the rotary or translatory engagement of the tension member (9), the latter and the panel (3) engaging in one another in rotary manner about an actuating axis (7) spaced from the tension member (9) and preferably at least one wedge face (36, 37) is curved about said actuating axis (7) and/or the main tension surface (25) is located on the side of the head (10) remote from the actuating axis (7).

11. Mechanism according to one of the preceding claims, characterized in that at least one securing member for the fastening position of the tension member (9) is provided and preferably on the base member (16) there is a resiliently disengageable securing cam (43) for engaging in a securing opening (44) of the panel (3).

**Revendications**

1. Dispositif de fixation pour la retenue d'appareils fonctionnels, tels que des appareils d'actionnement, des dispositifs électriques de commande de puissance et de commutation, ou dispositifs similaires, au voisinage d'une perforation (11, 14') pratiquée sur une platine (3, 2') à raccords, telle qu'un panneau obturateur d'appareil ou élément similaire, présentant des organes de retenue (8, 9 ; 12', 16') conçus pour prendre appui des deux côtés de la platine à raccords, destinés à être mis en prise de fixation avec le corps (4, 7') de l'appareil, en un mouvement de verrouillage, et munis de surfaces d'appui (24, 25 ; 17') en vue de prendre appui, au moins un organe de retenue réalisé sous la forme d'un organe de blocage (9, 16') comportant, sur une région (17, 19') formant fût et traversant la perforation (11, 14') en position de fixation, une région (10, 18') formant tête qui matérialise au moins l'une des surfaces d'appui (24, 25 ; 17') portant à plat, avec précharge, dans la position de fixation, caractérisé par le fait que la région (17, 19') formant fût d'au moins un organe de blocage est disposée dans la position de fixation, sur le corps (4, 7') de l'appareil, avec au moins une faible mobilité transversalement par rapport à la délimitation interne (26, 27 ; 15') de la perforation (11, 14'), ainsi que transversalement par rapport au mouvement de verrouillage ; et par le fait que, en vue de la distribution autoréglée de la force de blocage sur la surface d'appui (24, 25 ; 17') par rapport à la platine (3, 2'), l'organe de blocage ( 9, 16') est par lui-même doué de mobilité élastique à la manière d'au moins une zone articulée, sous l'effet de la force d'appui appliquée.

2. Dispositif selon la revendication 1, caractérisé par le fait que, dans la position de fixation, l'organe de blocage (9) est appliqué avec précharge par des surfaces d'appui (24, 25) de la tête (10), de part et d'autre d'un plan médian (20), dans la région du côté associé (35) de la platine (3) voisin de l'orifice de passage (11), dans la direction principale de blocage sensiblement perpendiculaire à la platine ; par le fait que la tête (10) de l'organe de blocage (9) est appliquée sur la platine (3), par des surfaces d'appui (24, 25) de réalisations différentes, des deux côtés de l'orifice de passage (11) mutuellement opposés ; et par le fait que la position des surfaces d'appui (24, 25) dévie de la position spéculaire, par rapport au plan médian (20) situé entre lesdites surfaces, de telle sorte qu'au moins une surface d'appui (24) soit soumise à une composante de force de blocage s'étendant transversalement par rapport à la direction principale de blocage.

3. Dispositif selon la revendication 1 ou 2, caractérisé par le fait qu'au moins une arête de délimitation (38) de la surface marginale (26) de l'orifice de passage (11) forme au moins un tranchant, en vue de la pénétration dans la surface d'appui associée (24) de l'organe de blocage (9).

4. Dispositif selon l'une des revendications précédentes, caractérisé par le fait que l'organe de blocage (16') est disposé avec mobilité sur le corps (7') de l'appareil dans sa direction de précharge élastique, autour d'un axe d'articulation (25', 27') d'une zone articulée (24', 26') ; et par le fait qu'au moins un organe de blocage (16') est conçu pour s'appliquer, dans la position de fixation, avec contact s'établissant au moins partiellement à l'extérieur de la délimitation (15') de la perforation (14'), du côté associé (8') de la platine (2') à raccords, et est mobile avec pivotement élastique, autour d'au moins une zone articulée supplémentaire (24', 26') située à distance (37', 38') de l'autre zone articulée (24', 26'), en vue du contact à plat autocompensateur, par rapport au corps (7') du dispositif (3'), sur l'étendue (39') de sa surface d'appui (17') orientée transversalement par rapport à l'axe d'articulation (25', 27') de sa zone articulée (24', 26').

5. Dispositif selon l'une des revendications précédentes, caractérisé par le fait qu'au moins une surface d'appui (24), prévue en tant que surface de blocage transversal, présente une surface cunéiforme (36) qui est notamment prévue pour s'appliquer à plat contre l'arête de délimitation associée (38) de la surface marginale (26) de l'orifice de passage (11), et décrit de préférence, par rapport au plan médian (20), un angle aigu s'ouvrant vers l'extrémité (32) de la tête (10), dispositif dans lequel, en particulier, les deux surfaces d'appui (24, 25) comportent des surfaces cunéiformes (36, 37) dont la distance mutuelle maximale est plus grande que la largeur correspondante de l'orifice de passage (11), et dans lequel, en outre, la surface cunéiforme (37) située en vis-à-vis de la surface de blocage transversal décrit, de préférence, un angle plus petit par rapport au plan médian (20).

6. Dispositif selon l'une des revendications précédentes, caractérisé par le fait qu'au moins une surface d'appui (25), prévue en tant que surface principale de blocage, présente une surface d'épaulement (29) qui est de préférence réalisée pour assurer l'appui, sur le côté associé (35) de la platine (3), uniquement à distance en dehors de l'arête de délimitation associée (39) de l'orifice de passage (11).

7. Dispositif selon l'une des revendications précédentes, caractérisé par le fait que le fût (17) de l'organe de blocage (9), portant la tête (10), est réalisé déformable élastiquement, en particulier dans la direction de blocage transversal, par lui-même et/ou en association avec un corps de base (16) ; par le fait que le fût (17) de l'organe de blocage (9) forme de préférence, à la base du fût, une membrure de base (23) qui est reliée d'une seule pièce, au corps de base (16), uniquement aux deux extrémités ; et par le fait que le corps de base (16) notamment configuré en une plaque est traversé de part et d'autre de l'organe de blocage (9), en particulier de part et d'autre du plan médian (20), par des fentes (21, 22) qui, de préférence, sont pour l'essentiel recouvertes par la tête (10).

8. Dispositif selon l'une des revendications précédentes, caractérisé par la présence, des deux côtés de la tête (10) de l'organe de blocage (9), de surfaces d'épaulement (28, 29) qui sont mutuellement décalées dans la direction principale de blocage et dont en particulier au moins l'une est prévue dans une position basculée par rapport au plan médian (20), l'une et l'autre étant de préférence sensiblement prévues dans un plan commun ; par le fait que notamment l'organe de blocage (9) revêt pour l'essentiel la forme d'un T en coupe transversale ; et par le fait que, de préférence, la transition entre le fût (17) en T et au moins une surface d'épaulement (28, respectivement 29) est formée par la surface cunéiforme correspondante (36, respectivement 37).

9. Dispositif selon l'une des revendications précédentes, caractérisé par le fait que les axes d'articulation (25', 27') des zones articulées (24', 26') de l'organe de blocage (16') sont agencés au moins approximativement avec parallélisme mutuel, et de préférence parallèlement au plan de cloisonnement (4') de la platine (2') à raccords et/ou perpendiculairement à un plan axial (21') de la perforation (14') ; par le fait que, par ailleurs, les axes d'articulation (25', 27') des zones articulées (24', 26') se trouvent de préférence, transversalement par rapport au plan de cloisonnement (4') de la platine (2') à raccords, à une distance mutuelle qui est, en particulier, plusieurs fois plus grande que l'épaisseur de la platine (2') à raccords ; par le fait qu'en outre, de préférence, un axe d'articulation (25') proche du plan de contact (36') de la surface d'appui (17') de l'organe de blocage (16') est, en particulier, décalé vers l'extérieur à une faible distance (37') du plan de contact (36') par rapport au côté associé (8') de la platine (2') à raccords, et/ou se trouve - observé dans la direction de blocage - au moins au voisinage de la délimitation (30') de la surface d'appui (17') tournée vers la délimitation (15'), ou bien entre les deux délimitations correspondantes de la surface d'appui (17') ; par le fait qu'en outre, de préférence, un axe d'articulation (27') se trouve à distance (38') à l'opposé de la surface d'appui (17') de l'organe de blocage (16'), en étant notamment prévu sur le côté intérieur (9') de la platine (2') à raccords ; par le fait qu'en outre, de préférence, les axes d'articulation (25', 27') des zones articulées (24', 26') de l'organe de blocage (16') sont mutuellement décalés parallèlement au plan de cloisonnement (4') de la platine (2') à raccords, l'axe d'articulation (25'), situé le plus près de la surface de contact (47') de l'organe de blocage (16'), étant notamment décalé vers l'extérieur dans le sens radial par rapport à l'autre axe d'articulation (27'), vis-à-vis de l'axe médian (5') de la perforation (14') ; par le fait qu'en outre, de préférence, au moins une zone articulée (24', 26') est réalisée d'une seule pièce avec les régions attenantes (18', 19', 20') de l'organe de blocage (16'), est formée par une zone de section transversale réduite par rapport aux régions voisines, et est en particulier délimitée par la surface de fond arrondie (29', 32' ; 34') d'au moins une gorge (28', 31', 33' ), l'organe de blocage (16') consistant notamment en un matériau à forte rigidité élastique ; par le fait qu'en outre, de préférence, la surface d'appui (17') d'au moins un organe de blocage (16') est décrochée, par rapport à la région (19') dudit organe attenante au corps (7') de l'appareil, par l'intermédiaire d'une encoche encaissée (31') qui forme notamment une délimitation de la zone articulée correspondante (24') et/ou est décalée, latéralement, par rapport à la gorge associée (28') ; par le fait qu'en outre, de préférence, au moins un organe de blocage (16') est réalisé à la manière d'une griffe de blocage sensiblement configurée en Z à angle droit, et est notamment ménagé d'une seule pièce avec au moins une partie d'un boîtier formant le corps (7') de l'appareil, en particulier avec un couvercle (11') de boîtier et/ou avec l'organe de retenue (12') conçu pour prendre appui sur l'autre côté (9') de la platine (2') à raccords ; et par le fait qu'en outre, de préférence, la surface d'appui (17') d'au moins un organe de blocage (16') est délimitée approximativement à la manière d'un couteau de répartition en coupe transversale sensiblement parallèle à au moins un axe d'articulation (25', 27'), présente notamment un bombement convexe et/ou est délimitée sur au moins un côté par un flanc incliné (42'), et s'étend en particulier radialement par rapport à l'axe médian (5') de la perforation (14').

10. Dispositif selon l'une des revendications précédentes, caractérisé par le fait que l'orifice de passage (11) comprend, à la manière d'une fermeture baïonnette, une région d'introduction (12) s'évasant au moins jusqu'à la largeur de la tête (10) de l'organe de blocage (9), et une région de verrouillage (13) qui se rattache à la région précitée, est rétrécie par rapport à la largeur de la tête (10), et assure la venue en prise rotatoire ou translatoire de l'organe de blocage (9), dispositif dans lequel l'organe de blocage (9) et la platine (3) sont imbriqués l'un dans l'autre avec faculté de rotation, en particulier autour d'un axe d'actionnement (7) situé à distance de l'organe de blocage (9), et, de préférence, au moins une surface cunéiforme (36, 37) est sensiblement cintrée autour de cet axe d'actionnement (7) et/ou la surface principale de blocage (25) se trouve du côté de la tête (10) qui est tourné à l'opposé de l'axe d'actionnement (7).

11. Dispositif selon l'une des revendications précédentes, caractérisé par au moins un organe d'arrêt pour la position de fixation de l'organe de blocage (9), une protubérance d'arrêt (43) désaccouplable élastiquement étant de préférence prévue, sur le corps de base (16), pour la venue en prise dans un orifice d'arrêt (44) de la platine (3).

Fig.1

Fig.2

*Fig.5*

44

12

40

11

14

13

13

11

13

12

11

*Fig.3*

2

43

45

8

16

9

42

42

15

9

*Fig.4*

57

15

10

9

32

20

28

41

24

34

36

19

21

18

2

17

29

25

37

22

16

23

42

8

**Fig. 6**

**Fig. 7**

**Fig.8**

**Fig.9**

Fig. 10

Fig. 11

Fig.12

Fig.13

Fig.14

Fig.15